# EUROPÄISCHE PATENTSCHRIFT

(11) **EP 1 755 134 B1**
(45) Veröffentlichungstag und Bekanntmachung des Hinweises auf die Patenterteilung: **12.03.2008**
(21) Anmeldenummer: 06118968.4
(22) Anmeldetag: 16.08.2006
(51) Int. Cl.: H01H 31/12, H02B 1/21

(54) **Rückseitige Isolierabdeckung für einen Sicherungslasttrennschalter**
Rear side insulation cover for a fuse load disconnecting switch
Couverture isolante arrière pour un interrupteur-sectionneur de sécurité

(30) Priorität: 19.08.2005 DE 202005013446 U
(43) Veröffentlichungstag der Anmeldung: 21.02.2007
(73) Patentinhaber: SIEMENS AKTIENGESELLSCHAFT, 80333 München (DE)
(72) Erfinder: Donner, Steffen, 16727 Bötzow (DE); Gnoerrlich, Uwe, 12621 Berlin (DE); Losch, Stefan, 13595 Berlin (DE); Schmidt, Detlev, 12055 Berlin (DE); Strubich, Petra, 14656 Brieselang (DE); Türkmen, Sezai, 13629 Berlin (DE)

(56) Entgegenhaltungen:
- EP-A- 1 271 727
- EP-A1- 1 215 785
- EP-A2- 1 251 537

## Beschreibung

Die Erfindung betrifft eine Isolierabdeckung zum Isolieren der Rückwand eines Sicherungslasttrennschalters.

Im Stand der Technik ist an Rückwänden von Sicherungslasttrennschaltern zum Teil gar keine Isolierung vorgesehen. Zur Isolation der Rückwand werden dann vorgegebene Abstände eingehalten, so dass sich Luft- und Kriechstrecken ergeben, die isolierend wirken. Dies trägt allerdings zum Höhenaufbau des Gesamtgeräts bei.

Da vereinzelt der Bedarf auftritt, eine gesonderte Isolation an der Rückwand vorzunehmen, gibt es im Stand der Technik Rückwände mit integrierter Isolation. Diese Rückwände sind naturgemäß komplexer aufgebaut als herkömmliche Rückwände.

In vielen Umgebungen ist die herkömmliche Isolation durch Abstand ausreichend. Es gibt jedoch Anwendungen, beispielsweise eine höhere Betriebsspannung oder eine höhere Spannungsfestigkeit, bei denen eine zusätzliche Isolation wünschenswert wird bzw. erforderlich ist.

Es ist Aufgabe der Erfindung, flexibel eine Isolation bereitzustellen, die mit wenig Aufwand nachgerüstet werden kann und einfach gestaltet ist.

Diese Aufgabe wird gelöst durch eine Isolierabdeckung mit den Merkmalen von Patentanspruch 1.

Die Vorteile der Bereitstellung einer derartigen Isolierabdeckung liegen darin, dass Sicherungslasttrennschalter mit der Isolierabdeckung nachgerüstet werden können. Die Isolierabdeckung kann auch jederzeit wieder abgenommen werden. Dadurch ist es möglich, im Standardfall herkömmliche Sicherungslasttrennschalter zur Verfügung zu stellen und lediglich im Bedarfsfall eine zusätzliche Isolierabdeckung an der Rückseite eines Sicherungslasttrennschalters zu befestigen. Wie in Patentanspruch 1 dargestellt, umfasst die Isolierabdeckung einen Plattenkörper, der an der Rückseite des Sicherungslasttrennschalters befestigbar ist. Weil an solchen Rückseiten üblicherweise Haken zur Befestigung des Sicherungslasttrennschalter an einer Sammelschiene vorgesehen sind, umfasst der Plattenkörper Fenster für die Haken und eine Abdeckkappe am Rand des Fensters zur Abdeckung und Isolierung des Hakens.

Der Plattenkörper ist gemäß einer bevorzugten Ausführungsform über eine Schnappverbindung an der Rückseite des Sicherungslasttrennschalters befestigbar. Entsprechend weist er zumindest ein Schnappelement auf, das mit einem weiteren Element (beispielsweise einem Rastelement) an dem Sicherungslasttrennschalter zusammenwirkt. Alternativ kann das eigentliche Schnappelement an dem Sicherungslasttrennschalter vorgesehen sein und der Plattenkörper dann lediglich eine Rastfläche aufweisen, die geeignet ist, mit einem Schnappelement an dem Sicherungslasttrennschalter zusammenzuwirken.

Die Befestigungsmöglichkeit des Plattenkörpers an dem Sicherungslasttrennschalter bzw. die Schnappverbindung kann insbesondere so ausgelegt sein, dass sie werkzeuglos betätigbar ist. Im Idealfall muss die Isolierabdeckung nur auf die Rückseite des Sicherungslasttrennschalters aufgedrückt werden, um dort befestigt zu sein.

Sicherungslasttrennschalter werden häufig um 180° gedreht, wobei die entsprechenden Haken dann zusätzlich um 180° gedreht werden. Um auch in diesem Falle die Isolierabdeckung an der Rückseite des Sicherungslasttrennschalter befestigen zu können, muss der eigentliche Plattenkörper, betrachtet ohne die Abdeckkappe, gegenüber einer Drehung um 180° symmetrisch sein. Mit anderen Worten ist er gegenüber einem Punkt in der Mitte der Platte punktsymmetrisch. Der Plattenkörper kann dann in einer zweiten Position an der Rückseite des Sicherungslasttrennschalters befestigt werden, um die gedrehten Haken nach wie vor abdecken zu können.

Bevorzugt ist die Isolierabdeckung aus isolierendem Kunststoff hergestellt, z. B. spritzgegossen.

Die Erfindung betrifft auch einen Sicherungslasttrennschalter mit einer daran (lösbar) befestigten Isolierabdeckung.

Eine bevorzugte Ausführungsform der Erfindung wird nun unter Bezug auf die Zeichnung beschrieben, in der:
- FIG 1: eine erfindungsgemäße Isolierabdeckung zeigt,
- FIG 2: einen Sicherungslasttrennschalter mit einer erfindungsgemäßen Isolierabdeckung von der Rückseite gesehen zeigt,
- FIG 3: einen Ausschnitt aus der Rückseite des Sicherungslasttrennschalters mit der Isolierabdeckung aus FIG 1 zeigt, wobei der Sicherungslasttrennschalter an Sammelschienen befestigt ist.

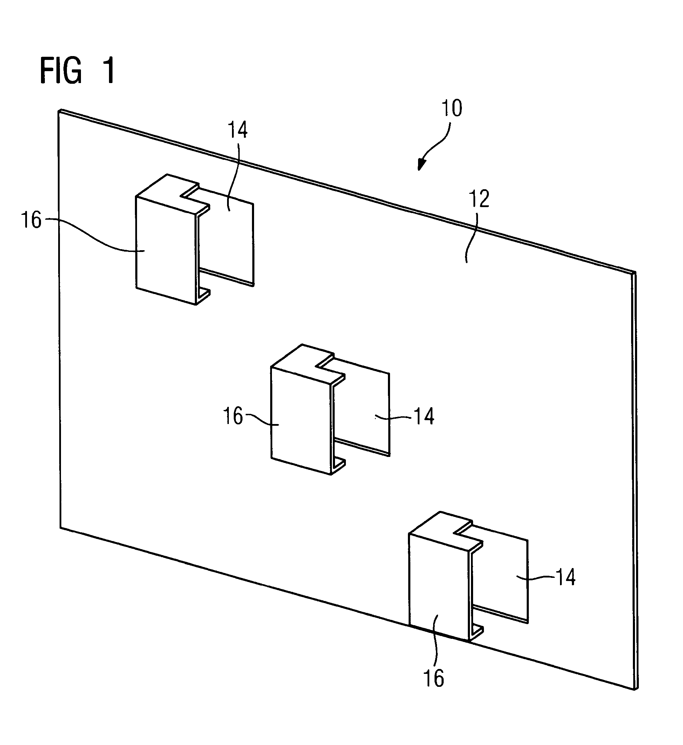

Die FIG 1 zeigt eine erfindungsgemäße Isolierabdeckung 10. Diese besteht im Wesentlichen aus einem Plattenkörper 12. Der Plattenkörper 12 ist rechteckig und relativ flach, wobei er geeignet ist, hinter Rastnasen an der Rückseite eines Sicherungslasttrennschalters befestigt zu werden, wobei ein Rand des Plattenkörpers 12 als Rastfläche dient. Alternativ könnte an dem Plattenkörper 12 auch ein Schnappelement vorgesehen sein, welches dann in die Rückseite des Sicherungslasttrennschalters eingreift. In dem Plattenkörper 12 sind Fenster 14 vorgesehen, durch die Haken führbar sind. Die Haken behindern somit nicht das Aufbringen der Isolierabdeckung auf die Rückseite eines Sicherungslasttrennschalters. Um auch die Haken von der Isolation zu erfassen, sind an dem Rand der Fenster 14 Abdeckkappen 16 befestigt, die auf den Haken aufsitzen. Passend zu L-förmigen Haken ist das Profil der Abdeckkappen auch L-förmig.

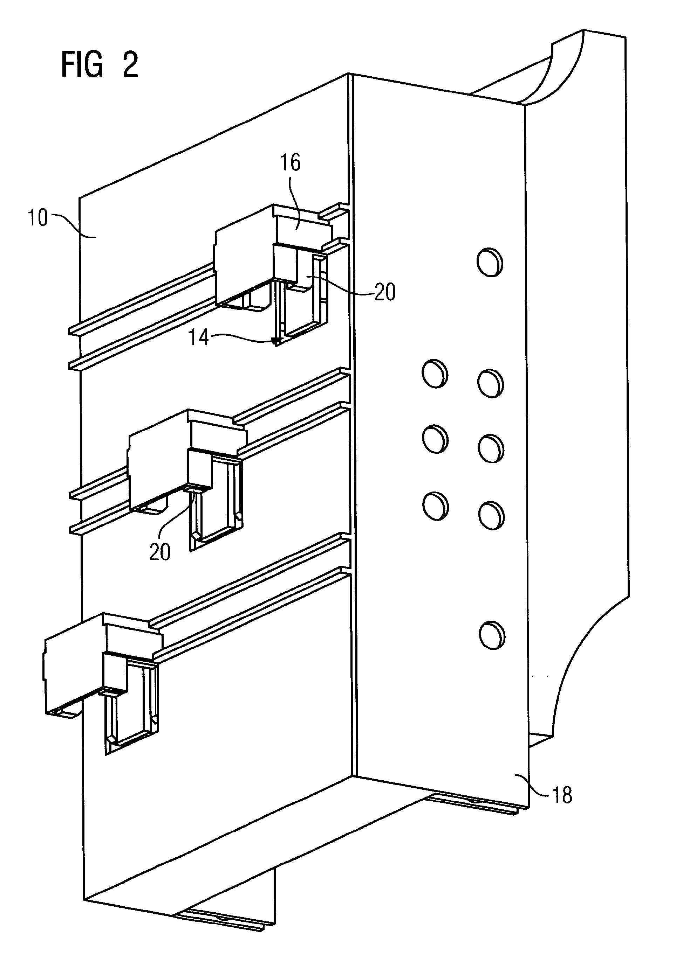

FIG 2 zeigt einen Sicherungslasttrennschalter 18, auf dessen Rückseite die Isolierabdeckung 10 aufgebracht ist. Zu sehen sind in Teilen die Haken 20, die durch das Fenster 14 geführt sind und von der Abdeckkappe 16 abgedeckt sind.

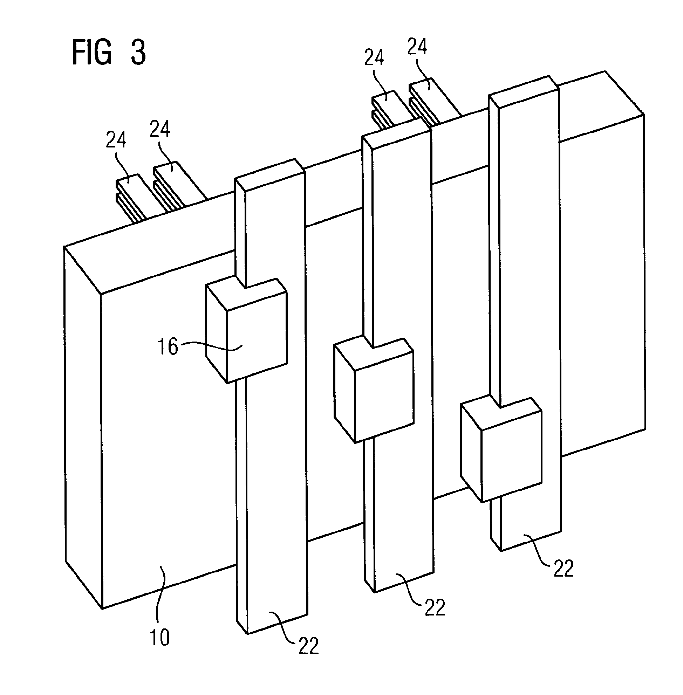

FIG 3 zeigt die Situation, in der die Haken den elektrischen Kontakt zu Sammelschienen 22 schaffen, an denen der Sicherungslasttrennschalter mit seiner Rückseite befestigt ist. Schematisch sind in FIG 3 die über die Haken mit den Sammelschienen 22 verbundenen inneren Schienen 24 zu sehen.

Der in FIG 1 gezeigte Plattenkörper 12 mit den Fenstern 14 ist bei einer Drehung um 180° symmetrisch. Lediglich die Abdeckkappen 16 sind von der Symmetrie nicht erfasst. Soll der Sicherungslasttrennschalter umgekehrt an den Sammelschienen befestigt werden, werden üblicherweise die Haken umgedreht. Entsprechend müssen die Abdeckkappen 16 auf der entgegengesetzten Seite positioniert sein. Dies geschieht durch Drehung des Plattenkörpers 12 um 180°, wodurch dann das in FIG 1 im Bild linke obere Fenster auf die rechte untere Seite gerät und umgekehrt und die Abdeckkappen dann vom rechten Rand her verlaufen, anstatt wie in FIG 1 gezeigt vom linken Rand. Bei einem Umdrehen der Haken zur Umdrehung des Sicherungslasttrennschalters ist somit auch die Isolierabdeckung weiter verwendbar.

Die vorgesehene, in FIG 1 gezeigte Isolierabdeckung kann als Einzelteil hergestellt und geliefert werden und somit zur Nachrüstung vorhandener Sicherungslasttrennschalter dienen. Machen es die Umstände erforderlich, eine Isolierabdeckung vorzusehen, so muss nicht der Sicherungslasttrennschalter ausgetauscht werden, statt dessen kann eine Isolierabdeckung 10, wie sie in FIG 1 gezeigt ist, in der in den Figuren 2 und 3 dargestellten Weise auf die Rückseite des Sicherungslasttrennschalters aufgebracht werden.

### Bezugszeichenliste

- 10: Isolierabdeckung
- 12: Plattenkörper
- 14: Fenster
- 16: Abdeckkappe
- 18: Sicherungslasttrennschalter
- 20: Haken
- 22: Sammelschiene

## Patentansprüche

1. Isolierabdeckung (10) für einen Sicherungslasttrennschalter (18), mit einem aus isolierendem Material bestehenden Plattenkörper (12), der dazu ausgelegt ist, an der Rückseite eines Sicherungslasttrennschalters (18) befestigt zu werden, die zumindest einen Haken (20) zur Befestigung des Sicherungslasttrennschalters (18) an einer Sammelschiene (22) umfasst, wobei in dem Plattenkörper zu jedem Haken (20) an der Rückseite des Sicherungslasttrennschalters vorgesehen ist:
- ein Fenster (14), durch das ein Haken (20) führbar ist, sowie
- eine am Rand des Fensters befestigte Abdeckkappe (16) zur isolierenden Abdeckung des Hakens (20).

2. Isolierabdeckung nach Anspruch 1, bei der der Plattenkörper über eine Schnappverbindung an der Rückseite des Sicherungslasttrennschalters befestigbar ist und aufweist:
- zumindest ein Schnappelement, das mit einem weiteren Element an dem Sicherungslasttrennschalter zusammenwirkt oder
- eine Rastfläche, die geeignet ist, mit einem Schnappelement an dem Sicherungslasttrennschalter zusammenzuwirken.

3. Isolierabdeckung nach Anspruch 1 oder 2, bei der der Plattenkörper dazu ausgelegt ist, werkzeuglos an dem Sicherungslasttrennschalter befestigt zu werden.

4. Isolierabdeckung nach einem der vorhergehenden Ansprüche, bei der der Plattenkörper (12), betrachtet ohne Abdeckkappe (16), gegenüber einer Drehung um 180° symmetrisch ist.

5. Isolierabdeckung (10) nach einem der vorhergehenden Ansprüche, die aus Kunststoff hergestellt ist.

6. Sicherungslasttrennschalter (18) mit einer Rückseite, die zur Befestigung des Sicherungslasttrennschalters an einer Sammelschiene (22) ausgelegt ist, **gekennzeichnet durch** eine lösbar an der Rückseite befestigte Isolierabdeckung (10) nach Anspruch 1.

## Claims

1. Insulating cover (10) for a safety load disconnector (18), with a plate body (12), which is made from insulating material and is designed to be fixed to the rear side of a safety load disconnector (18), which rear side comprises at least one hook (20) for fixing the safety load disconnector (18) to a busbar (22), there being provided in the plate body for each hook (20) on the rear side of the safety load disconnector:
- a window (14), through which a hook (20) can be guided, and
- a covering cap (16), which is fixed to the edge of the window, for covering the hook (20) in an insulating fashion.

2. Insulating cover according to Claim 1, in which the plate body can be fixed to the rear side of the safety load disconnector via a snap-action connection and has:
- at least one snap-action element, which interacts with a further element on the safety load disconnector or
- a latching face, which is suitable for interacting with a snap-action element on the safety load disconnector.

3. Insulating cover according to Claim 1 or 2, in which the plate body is designed to be fixed to the safety load disconnector without the use of a tool.

4. Insulating cover according to one of the preceding claims, in which the plate body (12), when considered without the covering cap (16), is symmetrical with respect to a rotation through 180°.

5. Insulating cover (10) according to one of the preceding claims, which is manufactured from plastic.

6. Safety load disconnector (18) with a rear side, which is designed to fix the safety load disconnector to a busbar (22), **characterized by** an insulating cover (10) according to Claim 1 which is fixed detachably to the rear side.

## Revendications

1. Capot (10) isolant pour un interrupteur-sectionneur (18) de sécurité comprenant une pièce (12) en forme de plaque en un matériau isolant, qui est conçue pour être fixée au côté arrière d'un interrupteur-sectionneur (18) de sécurité et qui comprend au moins un crochet (20) de fixation de l'interrupteur-sectionneur (18) de sécurité à une barre (22) omnibus, dans lequel il est prévu, dans la pièce en forme de plaque, pour chaque crochet (20), sur le côté arrière de l'interrupteur-sectionneur (18) de sécurité :
- une fenêtre (24) dans laquelle un crochet (20) peut passer, ainsi que
- un capuchon (16) de recouvrement, qui est fixé au bord de la fenêtre et qui est destiné à recouvrir de façon isolante le crochet (20).

2. Capot isolant suivant la revendication 1, dans lequel la pièce en forme de plaque peut être fixée par une liaison à déclic au côté arrière de l'interrupteur-sectionneur de sécurité et a :
- au moins un élément à déclic, qui coopère avec un autre élément de l'interrupteur-sectionneur de sécurité, ou
- une surface d'encliquetage, qui est propre à coopérer avec un élément à déclic de l'interrupteur-sectionneur de sécurité.

3. Capot isolant suivant la revendication 1 ou 2, dans lequel la pièce formant plaque est conçue pour être fixée sans outil à l'interrupteur-sectionneur de sécurité.

4. Capot isolant suivant l'une des revendications précédentes, dans lequel la pièce (12) formant plaque est, si on la considère sans le capuchon (16) de recouvrement, symétrique par rapport à une rotation de 180°.

5. Capot (10) isolant suivant l'une des revendications précédentes qui est en matière plastique.

6. Interrupteur-sectionneur (18) de sécurité ayant un côté arrière conçu pour fixer l'interrupteur-sectionneur de sécurité à une barre (22) omnibus, **caractérisé par** un capot (10) isolant suivant la revendication 1, qui est fixé de manière amovible au côté arrière.
